(19) Europäisches Patentamt / European Patent Office / Office européen des brevets

(11) **EP 3 998 873 B1**

(12) **EUROPEAN PATENT SPECIFICATION**

(45) Date of publication and mention of the grant of the patent:
**26.03.2025 Bulletin 2025/13**

(21) Application number: **19778694.0**

(22) Date of filing: **16.07.2019**

(51) International Patent Classification (IPC):
$A23L\ 33/105$ (2016.01)    $A23L\ 33/115$ (2016.01)
$A23L\ 33/155$ (2016.01)    $C11B\ 1/10$ (2006.01)

(52) Cooperative Patent Classification (CPC):
**A23L 33/115; A23L 33/105; A23L 33/155; C11B 1/104;** Y02P 20/54

(86) International application number:
**PCT/IT2019/000054**

(87) International publication number:
**WO 2021/009781 (21.01.2021 Gazette 2021/03)**

(54) **PROCESS FOR EXTRACTION OF NUTRACEUTICAL COMPOUNDS FROM MICROALGAE BY USING CO2 IN SUPERCRITICAL CONDITIONS**

VERFAHREN ZUR EXTRAKTION VON NUTRAZEUTISCHEN VERBINDUNGEN AUS MIKROALGEN UNTER VERWENDUNG VON CO2 UNTER ÜBERKRITISCHEN BEDINGUNGEN

PROCÉDÉ D'EXTRACTION DE COMPOSÉS NUTRACEUTIQUES À PARTIR DE MICROALGUES AU MOYEN DE CO2 DANS DES CONDITIONS SUPERCRITIQUES

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(43) Date of publication of application:
**25.05.2022 Bulletin 2022/21**

(73) Proprietor: **NEXTCHEM TECH S.p.A.**
**00156 Rome (IT)**

(72) Inventors:
• **CICCI, Agnese**
  **00136 Roma (IT)**
• **IAQUANIELLO, Gaetano**
  **00153 Roma (IT)**
• **MAZZELLI, Alessio**
  **00155 Roma (IT)**

(74) Representative: **Sarpi, Maurizio et al**
**Studio Ferrario S.r.l.**
**Via Collina, 36**
**00187 Roma (IT)**

(56) References cited:
EP-A1- 3 275 981        CN-A- 109 608 376
US-A1- 2006 088 644

• SOVOVÁ HELENA ET AL: "New developments in the modelling of carotenoids extraction from microalgae with supercritical CO2", THE JOURNAL OF SUPERCRITICAL FLUIDS, vol. 148, 9 March 2019 (2019-03-09), pages 93 - 103, XP085647978, ISSN: 0896-8446, DOI: 10.1016/ J.SUPFLU.2019.03.002
• SOVOVA ET AL: "Mathematical model for supercritical fluid extraction of natural products and extraction curve evaluation", THE JOURNAL OF SUPERCRITICAL FLUIDS, ELSEVIER, AMSTERDAM, NL, vol. 33, no. 1, 1 January 2005 (2005-01-01), pages 35 - 52, XP027818801, ISSN: 0896-8446, [retrieved on 20050101]

# EP 3 998 873 B1

**Description**

**Summary**

The present invention consists in a process that allows the extraction of compounds of nutraceutical interest (specifically omega-3 and carotenoids) from microalgae and their separation through the use of $CO_2$ in supercritical conditions (and when necessary a co-solvent), at the same time.

**Field of the invention**

Today, there is a growing interest in products of organic origin. Regarding this, one of the most widely used sources is represented by microalgae, that is able to produce a wide variety of compounds with a high added value.

In the present invention a process that allows the extraction of compounds of nutraceutical interest (specifically omega-3 and carotenoids) from microalgae and their separation using $CO_2$ in supercritical conditions (and when necessary a co-solvent), at the same time, has been developed.

One of the main problems in the treatment of microalgae matrices consists in the difficulty of extraction and subsequent separation through a process that is completely green.

From this point of view, supercritical $CO_2$ is an excellent solution to the problem, indeed supercritical $CO_2$ ($sCO_2$) offers many advantages such: it is not toxic, it is not flammable, it is odorless, it is inert, it is easily separable, it has a competitive cost compared to common organic solvents and is recognized as GRAS (Generally Recognized As Safe).

For some component (carotenoids), where the use of the only supercritical $CO_2$, doesn't allow the extraction, according to another feature of the present application, is foreseen the use of an hydrophilic polar solvents such as methanol, ethyl acetate, ethanol, ethylene glycol or acetone, in which only ethanol is generally recognized as safe (GRAS).

**Prior art**

EP 3275981 A1 discloses a continuous process for fractionating a suspension chosen from a microalgal biomass or milk. In said process the contactor is a fractionation column or a settler-mixer wherein the wet microalgal biomass or the milk, and the supercritical CO2 are introduced in a counter-current mode. The process according to said document is carried out under pressure comprised between 8 and 30 MPa (80 - 300 bar) and at a temperature comprised between 35 and 70°C.

SOVOVÁ HELENA ET AL: "New developments in the modelling of carotenoids extraction from microalgae with supercritical CO2", The Journal of Supercritical Fluids, vol. 148, pages 93-103, discloses a study of the modeling of carotenoids extraction from microalgae with pure supercritical $CO_2$ and therefore with no solvent (ethanol or other).

CN 109608376 A discloses a method for supercritically extracting astaxanthin from Haematococcus pluvialis by means of supercritical $CO_2$ extraction. However said invention is not applicable where there are more molecules, over astaxanthin, having the same function but with different molecular weights and chemical character (amphotere, polar, apolar).

US 2006/088644 A1 discloses a process for producing vegetable oil products containing one or more constituents from a group which includes monoacylgylcerols, diacylglycerols, triacylglycerols, carotenes, tocols, phytosterols, squalene and free fatty acids by extracting the constituents from vegetable oil sources wherein selective extraction of constituents which are desired and removal of unwanted constituents and impurities are achieved by manipulating relative solubilities of the constituents and impurities in the supercritical fluid.

**Aim of the invention**

The first aim of the present invention is the development of an innovative process for the extraction of components with a high added value, including carotenoids and omega-3, from microalgae and using only carbon dioxide in a supercritical state ($sCO_2$ and when necessary a co-solvent).

A second aim of the present invention is the removal of an unwanted component (tripalmitin) from the lipid extract, always by using supercritical $CO_2$ in a fractional extraction, and advantageously using its different extraction kinetics respect to the component present in the lipid phase.

A third aim of the present invention is the use of green and GRAS (Generally Recognized As Safe) recognized solvents, that are suitable for nutraceutical purposes.

A fourth aim of the present invention is the use of supercritical $CO_2$ in all the extraction steps, obtaining a process easy to implement (being made up of the same equipments), in which the higher cost is the extractor's cost. The subject-matter of the present invention is defined in the appended claims.

## Description of figures

The solution proposed will be better understood by referring to the detailed description, in which is presented a preferred embodiment, but not limiting, and by referring to the following figures wherein:

Figure 1 shows the block flow diagram of the designed process;
Figure 2 shows the triolein extraction yield as a function of time at different temperatures;
Figure 3 shows the enlargement of tri-EPA extraction yield as a function of time at different temperatures;
Figure 4 shows the enlargement of tri-DHA extraction yield as a function of time at different temperatures;
Figure 5 shows the extraction yield trend of tripalmitin at different temperatures;
Figure 6 shows the extraction yield trend of triolein at different pressures;
Figure 7 shows the extraction yield trend of tripalmitin at different pressures;
Figure 8 shows the extraction yield trend of triolein at different SSR;
Figure 9 shows the extraction yield trend of tripalmitin at different SSR;
Figure 10 shows the comparison of the extraction yield for the studied triglycerides;
Figure 11 shows the enlargement of the tripalmitin extraction yield trend at different temperatures (P=250 bar and SSR=5 $h^{-1}$);
Figure 12 shows the tripalmitin extraction yield trend at different pressures (T=55 °C e SSR=5 $h^{-1}$);
Figure 13 shows the tripalmitin extraction yield trend at different SSR (T=55 °C e P=250 bar);
Figure 14 shows the carotenoids extraction yield (T=60 °C e SSR=5 $h^{-1}$);
Figure 15 shows the carotenoids extraction yield at different temperatures (P= 500 bar e SSR=5 $h^{-1}$);
Figure 16 shows the carotenoids extraction yield at different pressures (T= 60 °C e SSR=5 $h^{-1}$);
Figure 17 shows the process scheme for triglycerides extraction;
Figure 18 shows the process scheme for carotenoids extraction;
Figure 19 shows the triglycerides behavior (EPA) at different pressures, with constant temperature and SSR ratio (T=55°C; SSR=5 $h^{-1}$) expressed as extraction yield in function of extraction time;
Figure 20 shows the triglycerides behavior (triolein) at different temperatures, with costant pressure and SSR value (P=200 bar; SSR=5 $h^{-1}$) expressed as extraction yield in function of extraction time.

## Detailed description

The inlet feed of the process, corresponding to the present invention, consists in a daily quantity of lyophilized microalgal biomass; the microalgal biomass that can be used in the process can belong to one of the following classes:

- Chlorophyceae, which includes Chlorella, Scendesmus, Chlamydomonas, Haematococcus;
- Eustigmatophyte, which includes, for example, Nannochloropsis;
- Porphyridiophyaceae, which includes for example Porphyridium, and

Bacillariophyceae, which includes Phaeodactylum tricornutum.

With reference to the figures, the present invention consists in a process wherein the inlet feed is a daily quantity of lyophilized microalgal biomass equal to 360 kg, splitted in more cycles.

According to this preferred embodiment, but not limiting, it was decided to use three extractors: first two extractors has been used for triglycerides extraction and the last one has been used for carotenoids extraction.

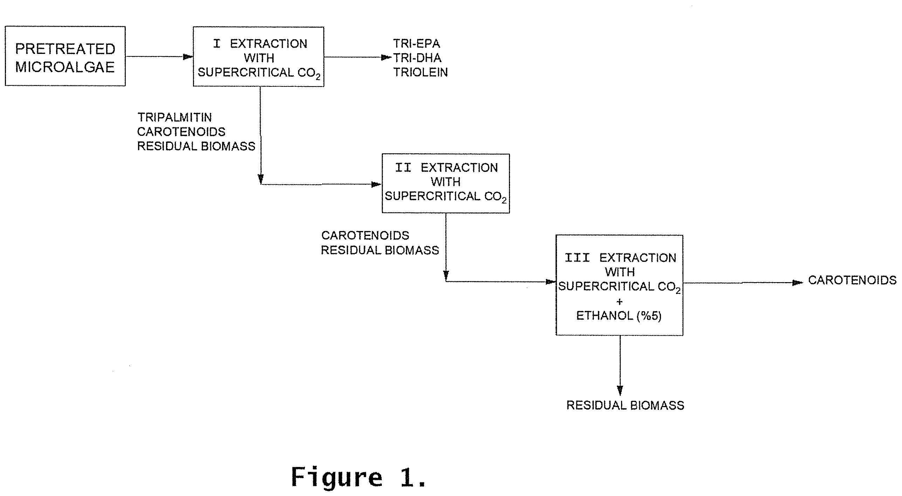

The developed process scheme is shown in fig.1.

The chlorella vulgaris has been selected as inlet biomass for the development of the present process; as abovementioned, some other microalgae can be used in the same process, as "pure" on in mixed feed; the only difference between the abovementioned microalgae is recognizable in the quantity of recovered components, which depends on initial composition of microalgae.

The microalgal composition of a freeze dried chlorella vulgaris, as reported in Table 1, has been considered for the process development.

**Table 1 - Composition of the chosen microalga (Chlorella vulgaris).**

| Component | Weight percentage |
| --- | --- |
| **Triolein** | 0.14 |
| **TriEPA** | 0.15 |
| **TriDHA** | 0.06 |
| **Tripalmitin** | 0.13 |

(continued)

| Component | Weight percentage |
| --- | --- |
| Lutein | 0.08 |
| Astaxanthin | 0.065 |
| Starch | 0.17 |
| Proteins | 0.205 |

Triolein has been used as representative of triglycerides (considered as simple triglycerides, consisting of three chains of the same fatty acid) containing fatty acid's chains with 18-carbon-atom, tripalmitin for chains with 16-carbon-atom, and EPA and DHA as representatives of omega-3 compounds.

For carotenoids, astaxanthin and lutein has been chosen as representatives of the category.

A functional fraction of starch and proteins has also been considered.

This microalga is loaded into the extractor, from the top of which the $CO_2$ is fed in a supercritical state. In particular the extractor is constituted by a vertical stainless stell cylindrical vessel, internally equipped with a closed basket occupying, depending on its dimensions, from 60 to 80% of the reactor's internal volume. In this preferred embodiment, for a optimized operational activity, the extracted output is collected from the bottom, but this position can be relocated together with the solvent inlet nozzle depending on the choice of countercurrent or equicurrent flow regime. Furthermore, these extractor are equipped with a half-pipe jacket in order to keep the extraction temperature at its set point during the process. The jacket's configuration, increasing the specific surface in contact with the extractor, optimizes the thermal exchange during the extraction process.

For more clarity, the two extraction sections, extracting respectively triglycerides and carotenoids, have been described separately below.

In both cases, carbon dioxide is initially available in a gaseous state, stored in containers at a temperature of 25 °C and atmospheric pressure.

The gaseous stream is initially delivered at a pressure of 47 bar, by using a multistage compressor (RC-101).

Then the compressed stream is cooled to a temperature of 10 °C by means of a special heat exchanger (C-101).

In this condition (47 bar and 10 °C) $CO_2$ is liquid, and this liquid flow is pressurized to a pressure higher than the critical one, which correspond to 250 bar, by using a pump (P-101 or P-102).

In order to use the $CO_2$ in its supercritical state, it is necessary to raise the temperature to a higher value than the supercritical temperature, corresponding to 55 °C, which is also the result of the optimization process; an heat exchanger (H-101 or H-104) is used for this purpose.

With the aim to develop a process able to obtain the desired product, is necessary to implement, in the simulation software, an appropriate mathematical model deduced and optimized from literature. Semi-empirical mathematical models and process simulators have been used in order to analyze the extraction kinetics, to calculate the volumes and flow-rates involved and to estimate the utilities consumption required by the process.

Two different models have been used: the first one has been used for the evaluation of triglyceride extraction using only supercritical $CO_2$; the second one has been used for the evaluation of carotenoid extraction using $sCO_2$ and co-solvent.

For the supercritical $CO_2$ extraction modeling, the Sovovà model has been used as the basis, in order to consider the diffusional kinetics of the metabolites inside the microalgae.

For the modeling of the extraction with supercritical $CO_2$ and solvent, the model proposed by Reverchon has been used as the basis, also suitably modified to the needs.

These models have been used in order to calculate the key variables of the process: temperature, pressure and solvent to solid ratio (SSR=Solvent to Solid Ratio).

These variables are always associated with the extraction yield, always with the aim of maximizing the extraction. The mathematical modeling of the system allows the calculation of the time required to reach the equilibrium value for the triglycerides present in the microalgae by varying the three main variables previously mentioned: pressure, temperature and SSR.

The extent of extract and residue have been characterized in terms of quantity and composition of all the target components, by starting from the input parameters as mass of microalga and its composition obtained by bibliographic research, as previously mentioned.

## Triglycerides extraction

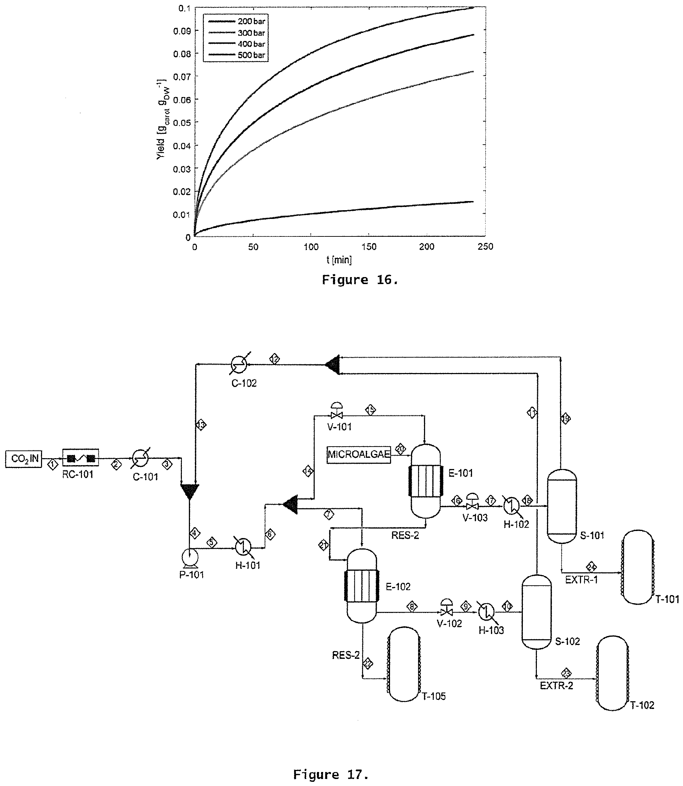

The triglycerides extraction section of the developed process, according to a preferred embodiment of the present invention, but not limiting, is shown in Figure 17.

In particular, the extractors one and two (E-101 and E-102) are used to remove triglycerides from solid biomass, as previously mentioned.

This feature derives both by the needs to extract the components with high added value and to separate the tripalmitin from triolein and from the EPA and DHA triglycerides.

Tripalmitin, indeed, is composed by saturated fatty acids chains that are harmful to health and therefore not usable for nutraceutical purposes.

The effect of each variable such as temperature, pressure and solvent to solid ratio, has been analyzed separately, by varying in turn the own value of one of them and maintaining constants the remaining two.

The studied ranges for the mentioned variables, have been chosen after bibliographic research and these choices has been confirmed by the trends obtained for process optimization.

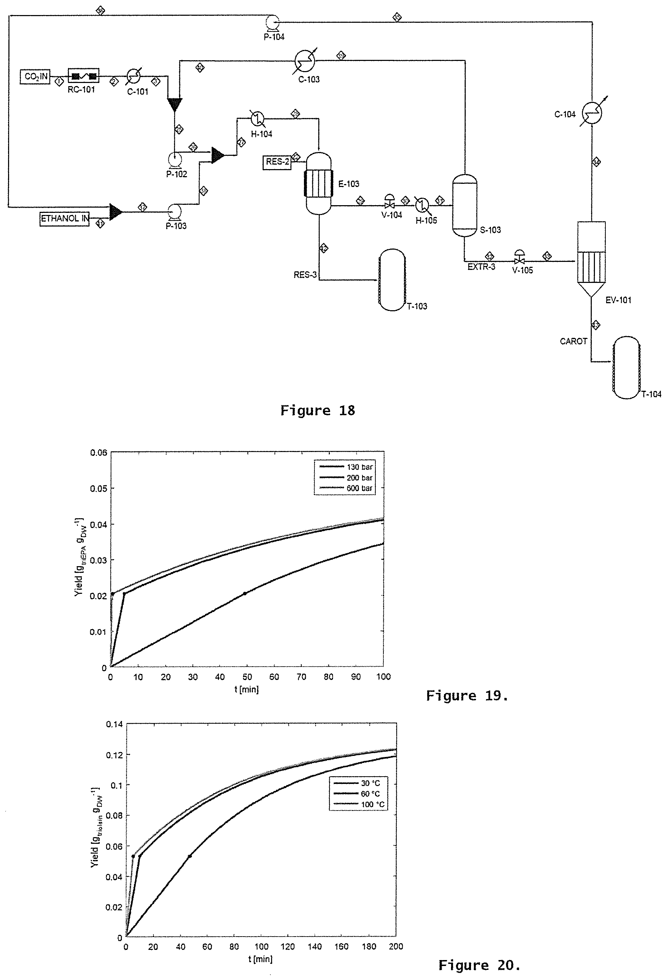

Ranges and trends are shown in figures 19 and 20, in which are respectively presented: in figure 19 pressure ranges, at constant temperature and SSR value, and temperature ranges in figure 20, at constant pressure and SSR value, expressed as extraction yields in function of extraction time.

It can be recognized that low pressure and temperature values reduce the extraction speed, making the process too slow.

On the contrary, a marked increase in the variables does not significantly change the extraction speed.

For this reason, is not convenient to work in such conditions of high pressure and high temperature.

The pressure range investigated is comprised between 130 bar and 600 bar; temperature range investigated is comprised between 30°C and 100°C.

In this preferred embodiment, both extractors work in the same temperature conditions (55°C), whereas about the pressure, the first one is set at 200 bar and the second one is set at 250 bar.

Once the desired conditions of 55°C and 200 bar are reached in the first extractor and 55°C and 250 bar in the second, the $CO_2$ flows inside the extractors through the solid bed of freeze-dried microalgae.

In this preferred embodiment, the Solvent to Solid Ratio (SSR), has been set at 5 $h^{-1}$ which allows a lower solvent consumption and, thus advantageously, lower costs.

As previously explained the mathematical modeling of the system allows the calculation of the time required to reach the equilibrium value for the triglycerides present in the microalgae by considering pressure, temperature and SSR.

For technical reason, the extraction process shall be divided in more cycles, each one is characterized by the same physical parameters such as operating temperature, operating pressure, SSR value and, thus, extraction time of each cycle.

The single cycle extraction time has been obtained by the analysis of physical variable's influence on process. At this obtained extraction time is necessary to consider some additional hours for all the operations related to the load/unload of biomass in the extractors, the initial pressurization of the system and the final depressurization; for this preferred embodiment, this time has been considered by adding two hours for the load of the lyophilized microalgae into the extractor and to pressurize the system and for reactor depressurization and exhausted biomass discharge after extraction.

In each cycle, after the mentioned extraction time, an extract is obtained, consisting mainly of a mixture of triolein and triglycerides of EPA and DHA, with a quantity of tripalmitin close to zero.

After the extraction time, previously mentioned, the solvent containing the compounds of interest, is first expanded through a valve (V-102 and V-103), until to 47 bar, and then is heated by heat exchanger (H-102 and H-103) to the extraction temperature of 55 °C. This heating is necessary due to the decrease of temperature caused by the expansion of solvent in the valve.

In these conditions (47 bar and 55°C), $CO_2$ returns to its gaseous state and spontaneously separates from the extracted components (S-101 and S-102).

The triglycerides and the residue are collected at the bottom of the separator and sent to special storage vessels (T-101, T-102 and T-105), while the $CO_2$ in its gaseous state, is recirculated to the system. These special storage vessels, used also in the carotenoids' extraction (T-103 and T-104), are a pressurized and refrigerated stainless steel vessels.

The analyzed storage temperatures are between -10 °C to 10 °C but the best temperature, able to preserve the bioactive properties of both triglycerides and carotenoids, without requiring too much energy demand, is 4°C.

Also a slight pressurization has been kept in order to avoid contaminations, the studied range are between 1.02 bar to 2.5 bar, but the chosen pressure for this preferred embodiment is 1.5 bar.

As additional improvement of the metabolites' properties preservation, these vessels are sterilized and maintained at a controlled atmosphere with a $CO_2$ that is the best option for our case, but also $N_2$ or Ar atmospheres can be used.

By using an exchanger (C-102), the recirculated solvent is restored to a temperature of 10 °C in order to be routed at pump inlet (P-101) with the incoming $CO_2$ from cooler (C-101) at the same physical conditions.

The procedure described up to now for $CO_2$, from the liquid state onwards, is repeated for a certain number of times within the same extraction cycle until it reaches the total extraction time calculated through simulation for each individual extractor.

As previously explained, the total duration of the cycle is a sum of three times:

- $t_p$ :time needed to load the lyophilized microalgae into the extractor and to pressurize the system;
- $t_e$ :extraction time;

$t_d$ :time needed to reactor depressurization and exhausted biomass discharge.

In the present invention has been considered a total of 2 h for pressurization and for depressurization.

During the depressurization phase, the amount of solvent present in the extractor at that time is lost, so it is necessary to consider a daily make-up of $CO_2$ equal to 300 kg for the first extractor and 214 kg for the second, considering an initial quantity of microalga equal to 360 kg, according to a preferred embodiment of this invention.

Finally, with regard to the storage of extracted compounds and residual biomass, the presence of appropriate storage tanks is considered.

Specifically, there are two storage tanks for the extract located downstream of the $CO_2$/triglyceride separators and two tanks for the residual biomass located at the bottom of the extractors.

All outgoing extract and residual currents are stored at extraction temperature of 55 °C and at atmospheric pressure.

Through the modified model of Sovová, based on the characteristic times, has been calculated the required time to reach saturation of triglycerides inside the $sCO_2$.

The values of the saturation yield ($c_u$) for the four considered components are shown in Table 2:

**Table 2 - sCO2 extraction saturation yield for each component**

| Component | Saturation Yield (Cu) $[g_{TAG} g_{DW}^{-1}]$ |
|---|---|
| **Triolein** | 0.13 |
| **TriEPA** | 0.05 |
| **TriDHA** | 0.11 |
| **Tripalmitin** | 0.12 |

In order to obtain the desired results, a series of parameters shall be included in the model in order to calculate the solubility of triglycerides in supercritical $CO_2$: density, viscosity of the solvent and the external mass transfer coefficient have been investigated, which in turn requires knowledge of the diffusivity values.

Regarding solubility, has been observed that the extraction of carotenoids by $sCO_2$ doesn't happen, except in a very small quantities practically zero, and therefore has occurred the need to use a co-solvent and, thus, the Reverchon model.

The Table 3 shows the values of triglycerides' diffusivity in supercritical $CO_2$.

**Table 3 - Diffusivity values of soluble triglycerides in supercritical $CO_2$.**

| TAG | $D_{12}$ x $10^{-9}$ [$m^2 s^{-1}$] |
|---|---|
| **Tripalmitin** | 4.32 |
| **Triolein** | 4.13 |
| **TriEPA** | 4 |
| **TriDHA** | 3.84 |

The values shown in Tab.3 has been calculated at 200 bar pressure and at 55 °C temperature, according to a preferred embodiment of the process, but not limiting to.

The mathematical modeling of the system allows, as specified above, the calculation of the time required to reach the equilibrium value for the triglycerides present in the microalgae varying the three main variables: pressure, temperature and SSR.

The preferred values of the aforementioned variables, used within the code, are listed below:

- Pressure [bar]               : 200, 250 e 300;
- Temperature [°C]            : 50, 55, 60;
- SSR [$kg_{solvent} kg_{biomass}^{-1} h^{-1}$]   : 5, 10 e 20.

## Temperature effects

The temperature effects, in the range 50, 55, 60 °C, have been analyzed at the same pressure and SSR fixed at 200 bar and 5 h$^{-1}$, respectively, for all the components considered.

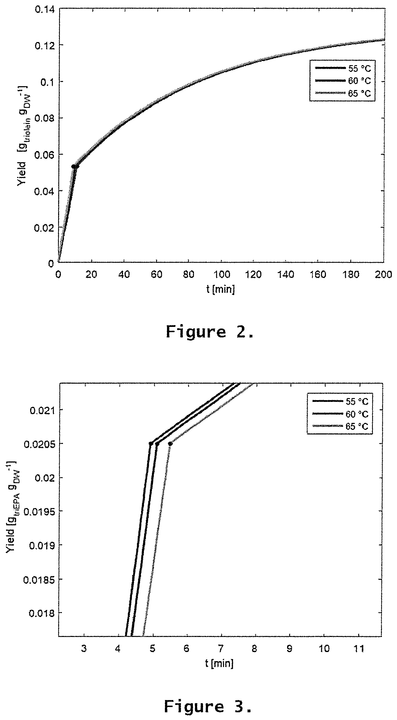

The trends obtained are shown in figures 2 to 5.

An increase in temperature usually results in a decrease in the time needed to reach saturation.

As a result, it is possible to carry out a greater number of cycles and thus extract a greater number of components.

For the triolein the model allows to obtain the trend shown in the following figure 2.

Particularly, no appreciable effect on the extraction yield has been observed by increasing the temperature value from 55 °C to 65 °C.

For this reason, an increase of the extraction temperature is useless, thus has been decided to perform the extraction at the lowest temperature analyzed (55°C).

As regarding EPA and DHA triglycerides, the influence of temperature on solubility, and consequently on extraction yield, has an opposite effect at the same pressure.

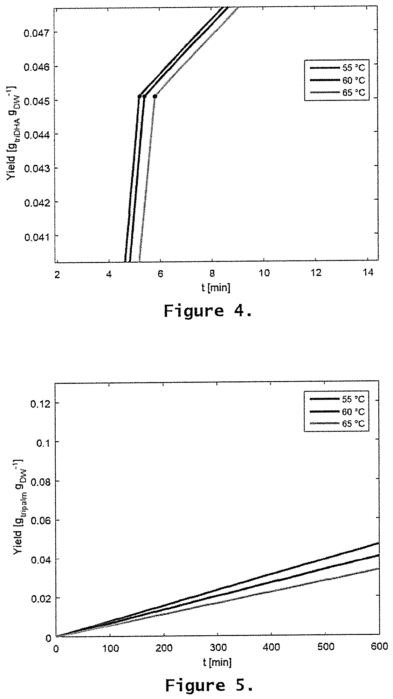

By analyzing figures 3 and 4 is possible to affirm, also in this case, that at the different temperatures there was an almost similar extraction yield in the three analyzed cases, at the same time.

Specifically it can be noticed that at higher temperatures corresponds to a lower extraction.

This opposite behavior, compared to that observed for triolein, is due to the cross-over phenomenon.

The cross-over pressure (PCO) is defined as the pressure for which:

- At a P>PCO the solubility increases with increasing temperature;
- At a P=PCO the temperature has no effect on solubility and therefore on the extraction yield;
- At a P<PCO the solubility decreases with increasing temperature.

The cross-over phenomenon can be explained by considering the effect that temperature has on two quantities, namely the density of solvent and the solute vapor pressure.

The solute vapor pressure increases with temperature while the density of a fluid decreases with the increasing of temperature.

As a result, temperature and pressure affect the sCO2 extraction process in a complex way due to their combined effect on the above parameters.

In particular, below the cross-over pressure, the effect of the density is controlling and the solubility decreases with the increase in temperature.

Above the cross-over pressure, on the contrary, the effect of the solute vapor pressure is the controlling parameter and the solubility increases with the temperature increase.

Through the trends shown in Figures 3 and 4, it is possible to notice that as the temperature varies, there is no remarkable variation in the yield trend as a function of time.

Moreover, according to what was reported on the cross-over phenomenon, in this specific case the extraction has been carried out at a lower pressure than the PCO.

As previously affirmed, this confirm that working at lower temperatures reduces the extraction time, and thus is convenient to keep the temperature at 55°C.

Finally, by considering tripalmitin, the trends obtained at different temperatures are reported, again at a pressure of 200 bar and an SSR value of 5 h$^{-1}$.

In this case, the time required to reach saturation under the specified conditions is bigger than for the other considered components.

The obtained trend is shown in figure 5, also in this one the effect of the cross-over is visible.

The plotted figures shows that by increasing the temperature from 55°C to 65°C, the trend obtained didn't vary significantly and consequently the time to reach saturation remained almost unchanged; for this reason, in this preferred embodiment, has been decided to set the extractor temperature at the lowest temperature, corresponding to 55°C.

Moreover, this choice is also convenient by considering the loss of the properties of thermosensitive and thermolabile compounds, such as omega-3 and carotenoids, due to high temperatures.

## Pressure effects

The effects of the pressure on the extraction process have been evaluated by using a procedure similar to the above described for the temperature.

In this case the temperature has been set at 55°C, as above discussed, and the solvent/biomass ratio has been fixed at 5 h$^{-1}$.

An increase in pressure corresponds to an increase in solubility and consequently a decrease in the time required to reach saturation.

This feature derives from the effect that the pressure has on the density of the $CO_2$.

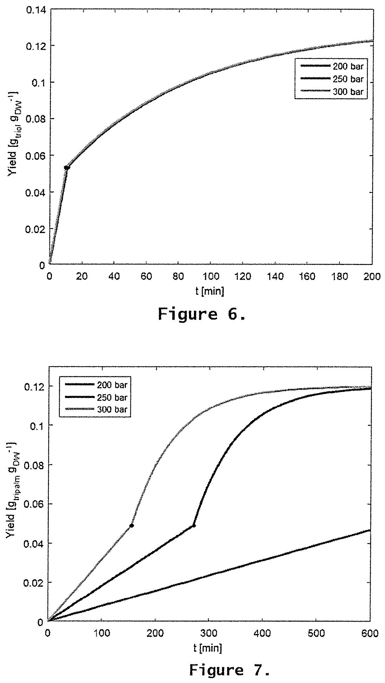

At higher pressures, in fact, the density of the solvent and the solute vapor pressure increases and this leads to an increase in the solubility of the individual component in the solvent itself. However, moving from a pressure of 200 bar to a pressure of 300 bar, no substantial increase has been notice in the extraction speed, as shown in figure 6 for triolein, with the exception of tripalmitin, which trend is shown in figure 7.

As regarding the results shown in previous figures, the extraction pressure has been set at the lowest pressure, corresponding to 200 bar, since an increase from this lowest value of pressure to 250 bar or to 300 bar, did not lead to an improve in extraction.

Moreover, an increase of the operating pressure inside the extractor involve in an increase of costs, both operational and also investment costs.

## Solvent to Solid Ratio (SSR) effects

The last variable analyzed is the solvent/biomass ratio; once its value was established, the kg of solvent to be inserted into the extractor is calculated.

Advantageously, in a preferred embodiment, but not limiting, of this invention, the daily available quantity of biomass has been considered equal to 360 kg.

The SSR range [$kg_{solvent}kg_{biomass}^{-1}h^{-1}$] investigated is between 2 and 20 $kg_{solvent}kg_{biomass}^{-1}h^{-1}$; the advantageously interesting values are: 5, 10 and 20.

Temperature and pressure has been set respectively to 55°C and 200 bar, as result of previous optimization.

The SSR variable has been increased in the above mentioned range, at fixed temperature and pressure, and the extraction yields of the individual components has been calculated.

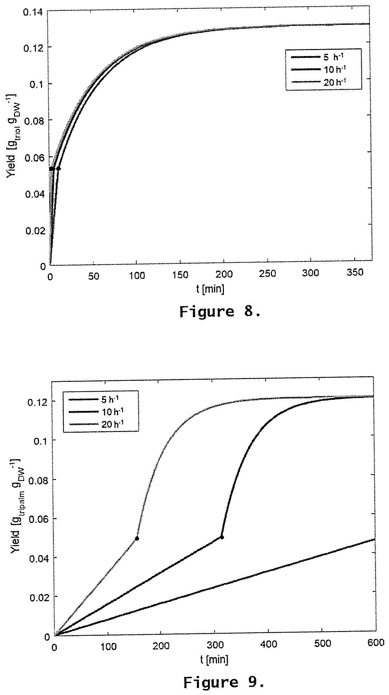

The trends obtained for triolein (given the similarity with tri-EPA and tri-DHA) and for tripalmitin are shown in figures 8 and 9.

The calculated extraction times are resumed in the table 4:

**Table 4 - Extraction times calculated for each component**

| SSR [$kg_{solvent}kg_{biomass}^{-1}h^{-1}$] | Time [min] | | | |
|---|---|---|---|---|
| | Triolein | Tripalmitin | TriEPA | TriDHA |
| **5** | 234.5 | 869.5 | 179.6 | 220 |
| **10** | 228.8 | 537.5 | 176.7 | 217.4 |
| **20** | 226.1 | 377.1 | 175.4 | 216.1 |

As regarding the results listed in the above table, has been noted that an increase in the solvent/biomass ratio from 5 $h^{-1}$ to 20 $h^{-1}$ didn't result in a considerable reduction in the time required to reach saturation, with the exception of tripalmitin.

However, tripalmitin is not desired in the final product as it is harmful to human health.

For this reason, advantageously in this preferred embodiment, the SSR value has been set at 5 $h^{-1}$; this value allows a lower solvents consumption and, consequently, lower costs.

As previously mentioned, is necessary the addition of two hours to the above extraction time, in order to consider the time of loading and pressurization before the extraction and the time of depressurization and unloading carried out at the end of each cycle.

After evaluating the time for each cycle, the daily cycles have been calculated and, with that, the total extracted quantity compared to the total dry biomass loaded.

Once the number of cycles is known, is possible to obtain the kg of microalgae to be inserted into the extractor for each cycle by dividing the total biomass available of 360 kg, by the number of cycles.

Therefore, the procedure adopted to calculate the daily amount of the extract can be summarized in this sequence:

- Set the extraction time to reach saturation, equal to that obtained for the slowest component;
- At that time, evaluate the quantity of components extracted;
- Calculate the number of daily cycles to be carried out;
- Calculate the microalgae to be loaded per cycle;
- Calculate the solvent flow rate to be inserted per cycle;
- Finally, evaluate the total daily amount of extract and residue.

This preferred embodiment has been decided to work for a total extraction time of 4 hours, corresponding to 234.5 minutes (as shown in table 4), to which is necessary to add two hours for the load of the lyophilized microalgae into the extractor and to pressurize the system and for reactor depressurization and exhausted biomass discharge after extraction.

The overall cycle time is, thus, about 6 hours.

At the chosen time, an extract was obtained, consisting mainly of a mixture of triolein and triglycerides of EPA and DHA, with a quantity of tripalmitin close to zero.

The results are shown in the following table (Table 5):

**Table 5 - Operative variables studied in this work and calculated output coming out the 1° extractor.**

| Variable | Results | |
| --- | --- | --- |
| Daily Cycles | 4 | |
| Biomass treaded in each cycle | 90 | kg |
| $sCO_2$ flowrate | 450 | $kgh^{-1}$ |
| Total extract | 105.0018 | kg |
| Total residue | 255.6 | kg |

**Results for tripalmitin fractional extraction**

According to the results above reported has been developed a process that works, in a preferred embodiment of this invention, but not limiting, at a temperature of 55 °C, a pressure of 200 bar and a solvent to solid ratio (SSR) equal to 5 h-1 , and that is able to obtain a product extracted rich in omega-3 and triolein with a quantity of tripalmitin close to zero (about 0.0018 kg).

As result, the residue stream outcoming from the first extractor contains all the tripalmitin present in the starting biomass.

An advantageously innovation of the developed process, indeed, is the possibility of the tripalmitin removal from the final product avoiding any further purification phases on the latter.

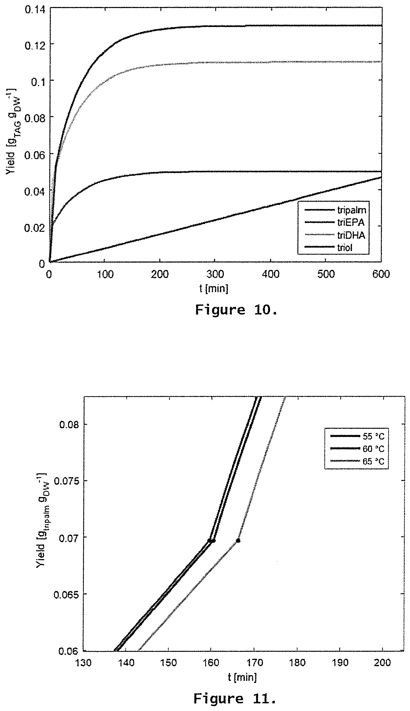

The time-dependent extraction yield, obtained for the four components at the preferred and selected conditions for the first extractor (200 bar and 55°C), are shown in Figure 10.

In figure 10 the trends of extraction yield for triolein, tri EPS, tri DHA and tripalmitin are shown. It can be recognized that for the triolein, tri EPA and tri DHA, the yield is constant, after the extraction time of 234.5 min; on the contrary the tripalmitin extracted during this time of 234.5 minutes is an amount of 0.0018 kg.

Consequently, is possible to obtain tripalmitin separately from the other triglycerides by performing a second extraction with $sCO_2$.

Through the use of the second extractor the separation between the residual biomass is performed, including the latter carotenoids, starch and proteins that can be sent to the following separation and recovery treatments, and all the residual triglycerides.

By splitting the extraction in two consecutive steps, in the second extractor there will be a solid residue in which the concentration of tripalmitin will be higher, as already specified.

In this case, the same procedure described in the above paragraphs has been carried out.

As previously mentioned, the pressure range investigated is comprised between 130 bar and 600 bar; temperature range investigated is comprised between 30°C and 100°C.

Also for this extraction, the SSR range [$kg_{solvent}kg_{biomass}^{-1}h^{-1}$] investigated is between 2 and 20 $kg_{solvent}kg_{biomass}^{-1}h^{-1}$; the advantageously interesting values are: 5, 10 and 20.

First, the effect of the temperature has been evaluated, maintaining constant the pressure and the SSR ratio value.

Secondly, the pressure effect has been then studied, setting the temperature and SSR values.

Finally the solvent/biomass ratio effect has been evaluated in order to maximize the design, at fixed temperature and pressure.

The results are shown in figures 11 to 13.

The cross-over phenomenon has been detected also in this case, by considering the temperature effect; consequently, an increase of the temperature from 55 °C to 65 °C involve in a decrease of the solubility as reported in figure 11, even if this effect is not remarkable.

Considering this, also in this case and for this preferred embodiment, temperature has been set at the lowest value equal to 55 °C.

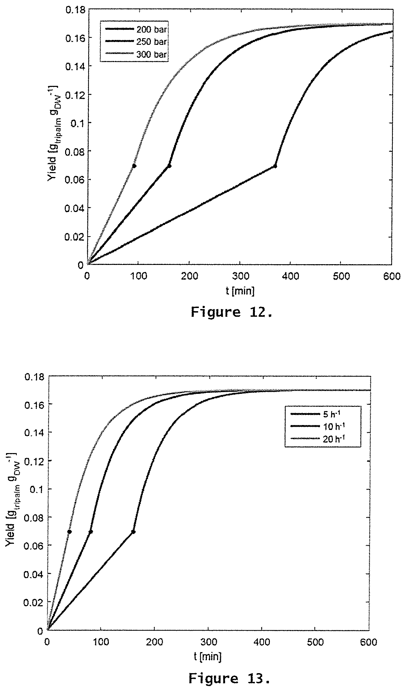

As regarding pressure has been detected that an increase of pressure, as shown in figure 12, from 200 to 250 bar, causes a considerable reduc-tion in the time required to reach saturation.

A further increase of 50 bar, on the other hand, did not produce a marked improvement.

For these reasons, in this preferred embodiment, but not limited, it has been decided to operate with a set pressure equal to an intermediate value of 250 bar.

Finally, once the pressure and temperature values inside the extractor are established, has been studied the SSR value, in order to optimize the quantity of $CO_2$ to be used, as shown in Figure 13. The saturation times for the different SSR values are resumed in Table 6:

**Table 6 - Extraction times calculated for tripalmitin extraction**

| SSR [$kg_{solvent}kg_{biomass}^{-1}h^{-1}$] | t [min] |
|:---:|:---:|
| 5 | 401 |
| 10 | 318 |
| 20 | 277 |

The results, shown in the above Table 6, indicates that an increase in the amount of solvent allows to reduce the extraction time of about 1 hour, from a value of SSR equal to 5 $h^{-1}$ to a value of 20 $h^{-1}$. However, the solvent/biomass ratio has been again fixed at 5 $h^{-1}$ in order to reduce operating costs. With this fixed parameters of temperature, pressure and SSR value, the following results have been obtained and resumed in the following table (Table 7):

**Table 7** - **Operative variables studied in this work and calculated output coming out the 2° extractor.**

| Variable | Results | |
|---|---:|---|
| **Daily Cycles** | 2 | |
| **Biomass treaded in each cycle** | 127.5 | kg |
| **$sCO_2$ flowrate** | 637.5 | $kgh^{-1}$ |
| **Total extract** | 61 | kg |
| **Total residue** | 194.6 | kg |

**Carotenoids extraction**

The carotenoids extraction section of the developed process, according to a preferred embodiment of the present invention, but not limiting, is shown in Figure 18.

After the removal of triglycerides from the biomass entering in the process, a daily solid residue of 194.2 kg is obtained from the second extractor.

The residual biomass, incoming from the triglycerides section, specifically from the bottom of the second extractor (E-102), is stored in the special tank (T-105). After this storage, the residual biomass is routed to the next stages of the process; in particular this biomass is put inside the extractor (E-103) where the optimized thermal and pressure conditions, further described, are reached.

As already mentioned, the extraction of carotenoids from the solid residue requires the use of a co-solvent, within the Reverchon model as previously mentioned.

Thus, the amount of residue is treated in a third extractor (E-103) in which the extraction is carried out by using supercritical $CO_2$ with, in this preferred embodiment, but not limiting, ethanol as a co-solvent.

The co-solvent is necessary due to the capacity of increase the solubility of carotenoids by $CO_2$. The yield obtained, reported as a function of time, has been expressed in relation to the total solid residue from previous extractions.

In this preferred embodiment ethanol has been selected as co-solvent for the feature that this alcohol is not harmful to human health in small quantity, and is generally recognized as safe (GRAS), such as $CO_2$, as previously mentioned.

Both the extracted carotenoids and the residue stream (made of starch and proteins) are collected into the special vessels (T-103 and T-104), which operative conditions have been previously described.

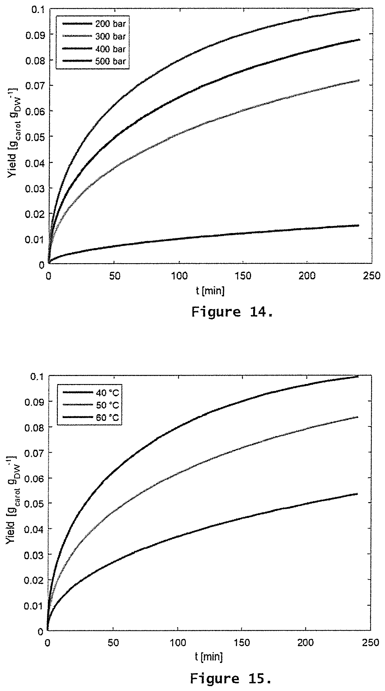

The typical trends obtained were shown in figure 14.

As shown in the figure 14, an increase in the extraction pressure has a positive effect on the extraction yield.

Conceptually, the process follows the same steps described above for the extraction of triglycerides.

The substantial difference is due to the presence of co-solvent (ethanol).

In this preferred embodiment, ethanol is available in liquid form at a temperature of 25°C and at atmospheric pressure.

Ethanol, as well as $CO_2$, must therefore be brought to the operating conditions of the extractor.

This requires the presence of a second pump (P-103) necessary to raise the co-solvent pressure to 500 bar.

The mixture of $CO_2$ and ethanol is then heated through a special heat exchanger (H-104) to reach a temperature of 60 °C and sent to the third extractor (E-103).

All the considerations previously disclaimed in the triglycerides' extraction, about the recovery and the recirculation of carbon dioxide, have been applied in carotenoids section for carbon dioxide recovery and recirculation.

A vacuum evaporator (EV-101), to recover the solvent (ethanol) collected at the bottom of the separator (S-103), is used.

The separation is carried out at lower pressures than the atmospheric one, and, in this preferred embodiment, between 0.01 and 0.5 bar, in order to avoid the increase of temperature to a value that could damage the extracted components.

Specifically, in this embodiment, temperature has been set at 40°C and operating pressure has been consequently calculated.

The solvent (ethanol) recovery rate has been fixed at 99% in order to minimize the loss of solvent and in order to maximize recovery.

As regarding the parameters above mentioned (temperature and recovery rate), the evaporator set pressure has been calculated and established at 0.05 bar. The vacuum inside the evaporator is maintained by the use of an ejector.

As regarding the solvent recovery rate, in this preferred embodiment ethanol recovery rate has been fixed at 99%; the extract obtained at the bottom will contain small amounts of co-solvent, corresponding to about 1% by weight, considering the preferred embodiment in which the daily inlet quantity of overall process is about 360 kg of lyophilized microalgal biomass.

However, is well known by literature that the presence of traces of ethanol is not harmful to human health.

Ethanol is collected on the top of the evaporator and is cooled by an heat exchanger (C-104) at a temperature equal to the temperature of the co-solvent at the inlet of the process, and is recirculated at PUMP-103 inlet by a recirculating pump (P-104).

Due to the loss of co-solvent inside the evaporator, a daily make-up of solvent (ethanol) has been calculated, and correspond to about 8.3 kg of ethanol per day, according to this preferred embodiment.

In this case a total extraction time of 4 hours has been fixed and the quantity extracted has been evaluated at different conditions.

The quantities of carotenoids extracted from the residual biomass using $sCO_2$ and co-solvent have been calculated by using Reverchon's modified model.

The carotenoids present within the biomass after the first two extraction cycles remain within the residue as they are not soluble within the supercritical $CO_2$, thus the use of co-solvent is necessary, in order to increase the solvation of carotenoids by supercritical $CO_2$.

The same procedure used for triglycerides has been followed: optimizing temperature, pressure and SSR to obtain the maximum yield.

As previously mentioned, the pressure range investigated is comprised between 130 bar and 600 bar; temperature range investigated is comprised between 30°C and 100°C.

Also for this extraction, the SSR range [$kg_{solvent}kg_{biomass}^{-1}h^{-1}$] investigated is between 2 and 20 $kg_{solvent}kg_{biomass}^{-1}h^{-1}$; the advantageously interesting values are: 5, 10 and 20.

In particular, internal diffusivity values have been derived from literature, since no specific equations are available for their calculation. The following table shows the diffusivities at different pressures and temperatures:

**Table 8 - Calculated carotenoids diffusivities (Dm).**

| P [bar] | T=40°C $D_m\times10^{-19}$ [$m^2s^{-1}$] | T=50°C $D_m\times10^{-19}$ [$m^2s^{-1}$] | T=60°C $D_m\times10^{-19}$ [$m^2s^{-1}$] |
|---|---|---|---|
| 200 | 2.8 | 5 | 0.75 |
| 300 | 4.38 | 24.5 | 26.3 |
| 400 | 0.75 | 27 | 50 |
| 500 | 13 | 44.3 | 90 |

The preferred values of pressure, temperature and SSR used in the mathematical model are listed below:

- Pressure [bar]　　　　　　　　　　: 200, 300, 400 e 500;
- Temperature [°C]　　　　　　　　 : 40, 50, 60;

(continued)

$$\bullet \text{ SSR } \quad kg_{solvent}kg_{biomass}^{-1}h^{-1} \qquad : 2, 5 \text{ e } 10.$$

The effect of each individual variable has been analyzed while keeping the remaining two fixed, with regard to the optimization of the carotenoid extraction process.

**Temperature effect**

As regarding temperature, the pressure has been set at 500 bar and the SSR variable at 5 $h^{-1}$.
The trends are illustrated in figure 15.
As shown in the picture, an increase in temperature has a positive effect on the extraction yield, at fixed pressure and SSR value; by considering this temperature has been set at 60°C.
This value allows to optimize the extraction and, at the same time, did not involve in the loss of properties of the extracted compounds; indeed, higher temperatures can degrade the component.

**Pressure effect**

Pressure effect on the extraction yield has been evaluated by fixing temperature and SSR values.
In figure 16 the trends obtained at 60°C and with an SSR value set at 5 $h^{-1}$ are shown.
As shown in the picture, an increase of pressure has a remarkable positive effect on the extraction yield.
Starting from these remarkable positive effects, the combined effects of pressure and temperature, at SSR value fixed at 5 $h^{-1}$ have been considered; the results are shown in the table below:

**Table 9 - Results obtained for carotenoids' extraction yield at different P and T (SSR=5 $h^{-1}$)**

| P [bar] | T=40°C | T=50°C | T=60°C |
|---|---|---|---|
| 200 | 0.028 | 0.036 | 0.015 |
| 300 | 0.034 | 0.069 | 0.072 |
| 400 | 0.015 | 0.072 | 0.088 |
| 500 | 0.054 | 0.084 | 0.099 |

As regarding the results shown in previous table, any further improve in pressure at different temperature, with the SSR value fixed, has a positive on the extraction yield; by considering this, the pressure has been set at the highest value, equal to 500 bar, increasing thus the total quantity of the extracted molecules.

**Solvent to Solid Ratio (SSR) effect**

It's known by literature that an increase on the amount of total solvent, equal to the sum of $sCO_2$ and solvent (ethanol), has no remarkable effect on the amount extracted.
A range of three different values of the SSR variable has been analyzed, in order to evaluate the exact quantity of the total solvent to be added in the third and last extractor; the optimization has been carried out by varying the solvent flowrate while keeping fixed the quantity of residual biomass.
Specifically, the analyzed ratio are as follows:

- 

$$\frac{Mass_{microalga}}{Flowrate_{solvent}} = \frac{1}{2}$$

- 

$$\frac{Mass_{microalga}}{Flowrate_{solvent}} = \frac{1}{5}$$

-

$$\frac{Mass_{microalga}}{Flowrate_{solvent}} = \frac{1}{10}$$

in which the term $Flowrate_{solvent}$ refers to the total quantity of solvent used, consisting of 95% by weight of supercritical $CO_2$ and 5% of solvent (ethanol).

The combined effects of SSR ratio and pressure have been analyzed at fixed temperature; the results are shown in the following table 10:

**Table 10 - Carotenoids' extraction yield at different SSR [h-1].**

| P [bar] | SSR=2 [h$^{-1}$] | SSR=5 [h$^{-1}$] | SSR=10 [h$^{-1}$] |
|---|---|---|---|
| **200** | 0.013 | 0.015 | 0.016 |
| **300** | 0.058 | 0.072 | 0.076 |
| **400** | 0.067 | 0.088 | 0.094 |
| **500** | 0.071 | 0.099 | 0.109 |

As shown in the above table, an increase in the SSR value, passing from 5 h$^{-1}$ to 10 h$^{-1}$ involves to an increase in the quantity of extract equal only to 6%.

As a result, the doubling of solvent is useless if compared with the low increase in the extraction yield amount.

For these reasons, the solvent/biomass ratio has been set at 5 h$^{-1}$. The following results have been obtained (Table 11):

**Table 11 - Operative variables studied in this work and calculated output coming out the 3° extractor**

| Variable | Results | |
|---|---|---|
| **Daily Cycles** | 4 | |
| **Biomass treaded in each cycle** | 48.6 | kg |
| **sCO$_2$ flowrate** | 243 | kgh$^{-1}$ |
| **Total extract** | 40.3 | kg |
| **Total residue** | 154.3 | kg |

## Characterization of extract and residual streams

The outgoing extract and the residual streams have been characterized, with the optimized variable as previously explained, and according to a preferred embodiment of this invention, but not limiting.

All the results shown in Table 12-13 shall be referred to daily quantities, by considering an inlet quantity of microalgae of 360 kg, entering in the first extractor.

Each stream shall be routed to a storage tank, subsequently sized, based on the quantities obtained.

In the following table (Table 12) are presented the amount of compounds in kilograms available in the three extracted streams incoming from the extractors.

**Table 12 - Characterization of the daily extract quantity.**

| Component | E1 [kg] | E2 [kg] | E3 [kg] |
|---|---|---|---|
| Triolein | 46.8 | 7.2 | |
| TriEPA | 18.4 | 3.6 | |
| TriDHA | 39.8 | 7.2 | |
| Tripalmitin | 0.0018 | 43 | |
| Lutein | | | 22.2 |
| Astaxanthin | | | 18.1 |
| Starch | | | |
| Protein | | | |
| **Total extract** | **105.0018** | **61** | **40.3** |

Specifically, E1 corresponds to the stream incoming from the first extractor and rich in EPA and DHA triglycerides and triolein; E2 represents the stream incoming from the second extractor consisting mainly of tripalmitin; finally, E3 correspond to the stream incoming from the third extractor containing mainly carotenoids (represented by astaxanthin and lutein, as previously mentioned).

As a result of this, it can be recognized that no protein or starch component can be found in each stream E1, E2 and E3.

This feature can be explained by referring to the insolubility of those component within sCO2 and sCO2 with co-solvent. As a consequence, both of these compounds will be found, after having carried out the extractions, in the residual solids coming out of the three extractors, as shown in Table 13:

**Table 13 - Characterization of the daily residue quantity**

| Component | R1 [kg] | R2 [kg] | R3 [kg] |
|---|---|---|---|
| Triolein | 7.2 | | |
| TriEPA | 3.6 | | |
| TriDHA | 7.2 | | |
| Tripalmitin | 50.4 | 7.4 | 7.4 |
| Lutein | 28.8 | 28.8 | 6.6 |
| Astaxanthin | 23.4 | 23.4 | 5.3 |
| Starch | 61.2 | 61.2 | 61.2 |
| Protein | 73.8 | 73.8 | 73.8 |
| Total residue | 255.6 | 194.6 | 154.3 |

Also in this case, the quantity shall referred to the kilograms of residue obtained daily. The streams R1, R2 and R3 are collected at the end of each cycle from the bottom of the extractor, after a proper system depressurization.

**Claims**

1. A process for the discontinuous extraction of components of nutraceutical interest such as carotenoids and omega-3 from microalgae biomass and their separation, **characterized in that** the inlet feed of the process is a lyophilized microalgal biomass, wherein said extraction and separation take place at the same time and said process occurs by using carbon dioxide in supercritical conditions, both pure and in mixture with a solvent, and wherein said separation takes place selectively with respect to the components and by several subsequent extractions, said process comprising the following steps:

   a. a first extraction in which the triglycerides of EPA and DHA are separated from said lyophilized microalgal biomass by extraction with pure supercritical carbon dioxide;
   b. a second extraction in which the tripalmitin is separated from the residue of the previous extractor by extraction with pure supercritical carbon dioxide;
   c. a third extraction in which the carotenoids are separated from the residue of the previous extractor, by extraction with supercritical carbon dioxide mixed with a solvent consisting of ethanol at 5% by weight;
   d. a first phase separation in which is routed the extract outcoming from the first extractor, consisting of carbon dioxide and triglycerides, and which allows the recovery of carbon dioxide by desorption, and its recirculation at the beginning of the triglyceride extraction process;
   e. a second phase separation in which is routed the extract outcoming from the second extractor, consisting of carbon dioxide and tripalmitin, and which allows recovery of carbon dioxide by desorption, and its recirculation at the beginning of the triglyceride extraction process;
   f. a third phase separation in which is routed the extract outcoming from the third extractor, consisting of the mixture of carbon dioxide / ethanol and carotenoids, and which allows the separation of carbon dioxide from the carotenoids and ethanol by desorption, and its consequent recirculation at the beginning of the carotenoid extraction process;
   g. an evaporation operating at lower pressure or under vacuum condition, in which it is routed the residue of the previous third separator, consisting of carotenoids and ethanol, and which allows the separation, by evaporation, of ethanol from carotenoids, and thus the recirculation of ethanol at the beginning of the carotenoid extraction process;
   h. the storage of the extracted product in storage tanks in which pressure and temperature are controlled;

wherein all the auxiliary equipment, such as pumps, compressors, heat exchangers and valves, are able to reach the process conditions suitable for the optimal performance of the aforementioned process.

2. A process according to claim 1 in which first, second and third extraction pressure ranges are between 130 bar and 600 bar.

3. A process according to claim 1 in which first, second and third extraction temperature ranges are between 30°C and 100°C.

4. A process according to claim 1 in which first, second and third extraction solvent to solid ratios (SSR) are between 2 h$^{-1}$ and 20 h$^{-1}$.

5. A process according to claim 1 in which first extraction pressure range is between 200 bar and 300 bar.

6. A process according to claim 1 in which first extraction temperature range is between 50 °C and 60°C.

7. A process according to claim 1 in which first extraction solvent to solid ratio (SSR) is between 5 h$^{-1}$ and 20 h$^{-1}$.

8. A process according to claim 1 in which first extraction is operated at 200 bar, 55°C and a SSR value equal to 5h$^{-1}$.

9. A process according to claim 1 in which second extraction pressure range is between 200 bar and 300 bar.

10. A process according to claim 1 in which second extraction temperature range is between 50°C and 65°C.

11. A process according to claim 1 in which second extraction solvent to solid ratio (SSR) is between 5 h$^{-1}$ and 20 h$^{-1}$.

12. A process according to claim 1 in which second extraction is operated at 250 bar, 55°C and a SSR value equal to 5h$^{-1}$.

13. A process according to claim 1 in which third extraction pressure range is between 200 bar and 500 bar.

14. A process according to claim 1 in which third extraction temperature range is between 40°C and 60°C.

15. A process according to claim 1 in which third extraction solvent to solid ratio (SSR) is between 2 h$^{-1}$ and 10 h$^{-1}$.

16. A process according to claim 1 in which third extraction is operated at 500 bar, 60°C and a SSR value equal to 5h$^{-1}$.

17. A process according to claim 1 in which the range of pressure of stored product is between 1.02 bar and 2.5 bar.

18. A process according to claim 1 in which the range of temperature of stored product is between - 10°C and 10°C.

19. A process according to claim 1 in which extracted products are collected in storage tanks advantageously operating at 1.5 bar and 4°C.


**Patentansprüche**

1. Verfahren zur diskontinuierlichen Extraktion von nutrazeutischen Verbindungen wie Carotinoiden und Omega-3 aus Mikroalgen-Biomasse und deren Abtrennung, **dadurch gekennzeichnet, dass** das Eingangsmaterial des Verfahrens eine gefriergetrocknete Mikroalgen-Biomasse ist, wobei die genannten Extraktion und Abtrennung gleichzeitig erfolgen und das genannte Verfahren unter Verwendung von Kohlendioxid unter überkritischen Bedingungen stattfindet, sowohl rein als auch im Gemisch mit einem Lösungsmittel, durchgeführt wird, und wobei die genannte Abtrennung wahlweise in Bezug auf die Verbindungen und durch mehrere aufeinanderfolgende Extraktionen erfolgt, das genannte Verfahren umfassend die folgenden Schritte:

   a. eine erste Extraktion, bei welcher die Triglyceride von EPA und DHA aus der gefriergetrockneten Mikroalgenbiomasse durch Extraktion mit reinem überkritischem Kohlendioxid abgetrennt werden;
   b. eine zweite Extraktion, bei welcher das Tripalmitin durch Extraktion mit reinem überkritischem Kohlendioxid aus dem Rückstand des vorherigen Extraktors abgetrennt wird;

c. eine dritte Extraktion, bei welcher die Carotinoide durch Extraktion mit überkritischem Kohlendioxid im Gemisch mit einem aus 5 Gew.-% Ethanol bestehenden Lösungsmittel von dem Rückstand des vorhergehenden Extraktors abgetrennt werden;

d. eine erste Phasentrennung, bei welcher der aus dem ersten Extraktor austretende und aus Kohlendioxid und Triglyceriden bestehende Extrakt geleitet wird und welche bewirkt, dass das Kohlendioxid durch Desorption wiedergewonnen und zu Beginn des Triglyceridextraktionsprozesses zurückgeführt wird;

e. eine zweite Phasentrennung, bei welcher der aus dem zweiten Extraktor austretende und aus Kohlendioxid und Tripalmitin bestehende Extrakt geleitet wird und welche bewirkt, dass das Kohlendioxid durch Desorption wiedergewonnen und zu Beginn des Triglyceridextraktionsprozesses zurückgeführt wird;

f. eine dritte Phasentrennung, bei welcher der aus dem dritten Extraktor austretende und aus dem Gemisch von Kohlendioxid/Ethanol und Carotinoiden bestehende Extrakt geleitet wird und welche bewirkt, dass das Kohlendioxid von den Carotinoiden und dem Ethanol durch Desorption abgetrennt und anschließend zu Beginn des Carotinoidextraktionsprozesses zurückgeführt wird;

g. eine bei niedrigerem Druck oder unter Vakuum durchgeführte Verdampfung, bei welcher der aus Carotinoiden und Ethanol bestehende Rückstand des vorhergehenden dritten Extraktors geleitet wird und welche bewirkt, dass das Ethanol durch Verdampfung von den Carotinoiden abgetrennt wird und somit das Ethanol zu Beginn des Carotinoidextraktionsprozesses zurückgeführt wird;

h. die Lagerung des extrahierten Produkts in Lagerbehältern, in welchen Druck und Temperatur kontrolliert werden;

wobei alle Hilfsgeräte, wie Pumpen, Kompressoren, Wärmetauscher und Ventile, in der Lage sind, die für ein optimales Durchführen des genannten Prozesses geeigneten Prozessbedingungen zu erreichen.

2. Verfahren nach Anspruch 1, bei welchem der erste, zweite und dritte Extraktionsdruckbereich zwischen 130 bar und 600 bar liegt.

3. Verfahren nach Anspruch 1, bei welchem der erste, zweite und dritte Extraktionstemperaturbereich zwischen 30°C und 100°C liegt.

4. Verfahren nach Anspruch 1, bei welchem das erste, zweite und dritte Extraktionslösungsmittel/Feststoff-Verhältnis (SSR) zwischen 2 h$^{-1}$ und 20 h$^{-1}$ liegt.

5. Verfahren nach Anspruch 1, bei welchem der erste Extraktionsdruckbereich zwischen 200 bar und 300 bar liegt.

6. Verfahren nach Anspruch 1, bei welchem der erste Extraktionstemperaturbereich zwischen 50°C und 60°C liegt.

7. Verfahren nach Anspruch 1, bei welchem das erste Extraktionslösungsmittel/Feststoff-Verhältnis (SSR) zwischen 5 h$^{-1}$ und 20 h$^{-1}$ liegt.

8. Verfahren nach Anspruch 1, bei welchem die erste Extraktion bei 200 bar, 55°C und einem SSR-Wert von 5 h$^{-1}$ durchgeführt wird.

9. Verfahren nach Anspruch 1, bei welchem der zweite Extraktionsdruckbereich zwischen 200 bar und 300 bar liegt.

10. Verfahren nach Anspruch 1, bei welchem der zweite Extraktionstemperaturbereich zwischen 50°C und 65°C liegt.

11. Verfahren nach Anspruch 1, bei welchem das zweite Extraktionslösungsmittel/Feststoff-Verhältnis (SSR) zwischen 5 h$^{-1}$ und 20 h$^{-1}$ liegt.

12. Verfahren nach Anspruch 1, bei welchem die zweite Extraktion bei 250 bar, 55°C und einem SSR-Wert von 5 h$^{-1}$ durchgeführt wird.

13. Verfahren nach Anspruch 1, bei welchem der dritte Extraktionsdruckbereich zwischen 200 bar und 500 bar liegt.

14. Verfahren nach Anspruch 1, bei welchem der dritte Extraktionstemperaturbereich zwischen 40°C und 60°C liegt.

15. Verfahren nach Anspruch 1, bei welchem das dritte Extraktionslösungsmittel/Feststoff-Verhältnis (SSR) zwischen 2 h$^{-1}$ und 10 h$^{-1}$ liegt.

**16.** Verfahren nach Anspruch 1, bei welchem die dritte Extraktion bei 500 bar, 60°C und einem SSR-Wert von 5 h$^{-1}$ durchgeführt wird.

**17.** Verfahren nach Anspruch 1, bei welchem der Druckbereich des gelagerten Produkts zwischen 1,02 bar und 2,5 bar liegt.

**18.** Verfahren nach Anspruch 1, bei welchem der Temperaturbereich des gelagerten Produkts zwischen -10°C und 10°C liegt.

**19.** Verfahren nach Anspruch 1, bei welchem die extrahierten Produkte in Lagerbehältern gesammelt werden, die vorteilhafterweise bei 1,5 bar und 4°C arbeiten.

**Revendications**

**1.** Processus d'extraction discontinue de composants présentant un intérêt nutraceutique tels que des caroténoïdes et des oméga-3 à partir de biomasse de microalgues et leur séparation, **caractérisé en ce que** le flux d'entrée du processus est une biomasse de microalgues lyophilisées, dans lequel lesdites extraction et séparation se produisent en même temps et ledit processus se produit au moyen de dioxyde de carbone dans des conditions supercritiques, à la fois pur et en mélange avec un solvant, et dans lequel ladite séparation se produit sélectivement par rapport aux composants et par plusieurs extractions ultérieures, ledit processus comprenant les étapes suivantes :

  a. une première extraction dans laquelle les triglycérides d'EPA et de DHA sont séparés de ladite biomasse de microalgues lyophilisées par extraction avec du dioxyde de carbone supercritique pur ;
  b. une deuxième extraction dans laquelle la tripalmitine est séparée du résidu de l'extracteur précédent par extraction avec le dioxyde de carbone supercritique pur ;
  c. une troisième extraction dans laquelle les caroténoïdes sont séparés du résidu de l'extracteur précédent, par extraction avec du dioxyde de carbone supercritique mélangé à un solvant constitué d'éthanol à 5 % en poids ;
  d. une première séparation de phase dans laquelle est acheminé l'extrait provenant du premier extracteur, constitué de dioxyde de carbone et de triglycérides, et qui permet la récupération de dioxyde de carbone par désorption, et sa recirculation au début du processus d'extraction des triglycérides ;
  e. une deuxième séparation de phase dans laquelle est acheminé l'extrait provenant du deuxième extracteur, constitué de dioxyde de carbone et de tripalmitine, et qui permet la récupération du dioxyde de carbone par désorption, et sa recirculation au début du processus d'extraction des triglycérides ;
  f. une troisième séparation de phase dans laquelle est acheminé l'extrait sortant du troisième extracteur, constitué du mélange dioxyde de carbone/éthanol et caroténoïdes, et qui permet la séparation du dioxyde de carbone des caroténoïdes et de l'éthanol par désorption, et sa recirculation consécutive au début du processus d'extraction des caroténoïdes ;
  g. une évaporation opérant à basse pression ou sous vide, dans laquelle est acheminé le résidu du troisième séparateur précédent, constitué de caroténoïdes et d'éthanol, et qui permet la séparation, par évaporation, de l'éthanol des caroténoïdes, et donc la recirculation de l'éthanol au début du processus d'extraction des caroténoïdes ;
  h. le stockage du produit extrait dans des cuves de stockage dans lesquelles la pression et la température sont contrôlées ;

  dans lequel tous les équipements auxiliaires, tels que les pompes, les compresseurs, les échangeurs de chaleur et les vannes, sont aptes à atteindre les conditions de processus adaptées à la performance optimale du processus susmentionné.

**2.** Processus selon la revendication 1 dans lequel des première, deuxième et troisième plages de pression d'extraction sont comprises entre 130 bar et 600 bar.

**3.** Processus selon la revendication 1 dans lequel des première, deuxième et troisième plages de température d'extraction sont comprises entre 30 °C et 100 °C.

**4.** Processus selon la revendication 1 dans lequel des premier, deuxième et troisième rapports solvant d'extraction/solide (SSR) sont compris entre 2 h$^{-1}$ et 20 h$^{-1}$.

**5.** Processus selon la revendication 1 dans lequel la première plage de pression d'extraction est comprise entre 200 bar et 300 bar.

**6.** Processus selon la revendication 1 dans lequel la première plage de température d'extraction est comprise entre 50 °C et 60 °C.

**7.** Processus selon la revendication 1 dans lequel le premier rapport solvant d'extraction/solide (SSR) est compris entre 5 h $^{-1}$ et 20 h $^{-1}$.

**8.** Processus selon la revendication 1 dans lequel la première extraction est opérée à 200 bar, 55 °C et une valeur SSR égale à 5 h $^{-1}$.

**9.** Processus selon la revendication 1 dans lequel la deuxième plage de pression d'extraction est comprise entre 200 bar et 300 bar.

**10.** Processus selon la revendication 1 dans lequel la deuxième plage de température d'extraction est comprise entre 50 °C et 65 °C.

**11.** Processus selon la revendication 1 dans lequel le deuxième rapport solvant d'extraction/solide (SSR) est compris entre 5 h $^{-1}$ et 20 h $^{-1}$.

**12.** Processus selon la revendication 1 dans lequel la deuxième extraction est opérée à 250 bar, 55 °C et une valeur SSR égale à 5 h $^{-1}$.

**13.** Processus selon la revendication 1 dans lequel la troisième plage de pression d'extraction est comprise entre 200 bar et 500 bar.

**14.** Processus selon la revendication 1 dans lequel la troisième plage de température d'extraction est comprise entre 40 °C et 60 °C.

**15.** Processus selon la revendication 1 dans lequel le troisième rapport solvant d'extraction/solide (SSR) est compris entre 2 h $^{-1}$ et 10 h $^{-1}$.

**16.** Processus selon la revendication 1 dans lequel la troisième extraction est opérée à 500 bar, 60 °C et une valeur SSR égale à 5 h $^{-1}$.

**17.** Processus selon la revendication 1 dans lequel la plage de pression de produit stocké est comprise entre 1,02 bar et 2,5 bar.

**18.** Processus selon la revendication 1 dans lequel la plage de température de produit stocké est comprise entre - 10 °C et 10 °C.

**19.** Processus selon la revendication 1 dans lequel des produits extraits sont collectés dans des cuves de stockage fonctionnant avantageusement à 1,5 bar et 4 °C.

Figure 1.

Figure 2.

Figure 3.

Figure 4.

Figure 5.

Figure 6.

Figure 7.

Figure 8.

Figure 9.

EP 3 998 873 B1

Figure 10.

Figure 11.

Figure 12.

Figure 13.

Figure 14.

Figure 15.

Figure 16.

Figure 17.

Figure 18

Figure 19.

Figure 20.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3275981 A1
- CN 109608376 A
- US 2006088644 A1

**Non-patent literature cited in the description**

- **SOVOVÁ HELENA et al.** New developments in the modelling of carotenoids extraction from microalgae with supercritical CO. *The Journal of Supercritical Fluids*, vol. 148, 93-103